# DEMANDE DE BREVET EUROPEEN

(11) **EP 1 880 887 A2**
(43) Date de publication de la demande: **23.01.2008**
(21) Numéro de dépôt: 07350003.5
(22) Date de dépôt: 05.04.2007
(51) Int. Cl.: B60J 7/06, B60J 7/14

(54) **Porte arrière pour véhicule à toit rétractable du type monocorps ou bicorps**

(30) Priorité: 17.07.2006 FR 0606479
(71) Demandeur: Heuliez, 79140 Cerizay (FR)
(72) Inventeur: Quéveau, Paul, 79140 Montravers (FR); Quéveau, Gérard, 79140 Le Pin (FR); Guillez, Jean Marc, 79140 Cirières (FR)
(74) Mandataire: Tournel, Jean Louis

(57) **Abrégé**

L'invention se rapporte porte arrière pour véhicule type bi-corps ou mono-corps comprenant un toit escamotable en deux parties, une partie avant et une partie arrière dont une venant se positionner au dessus de l'autre les dites parties étant mobile vers une position rangée couvrant la zone de coffre du véhicule caractérisée en ce que la porte arrière comprend deux bras (30) visibles se projetant vers l'avant et dont les extrémités libres sont articulées sur au moins un axe transverse (31) pour en permettre le basculement.

## Description

L'invention se rapporte à une porte arrière pour véhicule type bi-corps ou mono-corps comportant un toit escamotable .

Elle se rapporte également au véhicule équipé de la porte arrière.

Le véhicule dit mono-corps ou bi-corps se distingue des véhicules dit tri-corps en ce que ces derniers ont un coffre distinct de l'habitacle.

Pour ces véhicules dit tri-corps, pour ranger le toit escamotable, le couvercle du coffre qui est approximativement horizontal s'ouvre de l'avant vers l'arrière pour ranger les éléments de toit dans le dit coffre.

Pour les autres véhicules, le bord arrière de la face supérieure du toit va sensiblement jusqu'au plan vertical contenant le pare choc arrière et la porte arrière est sensiblement verticale.

Le principe utilisé sur les véhicules tri-corps ne peut donc être exploité pour les autres types de véhicules.

On connaît un véhicule mono-corps DE A 103 45 123 comprenant un toit escamotable dans le coffre, ce toit est en deux parties une partie avant venant se positionner sous une partie arrière.

Pour ranger ensuite le toit la structure arrière du véhicule en forme d'arche et portant la porte arrière doit basculer vers l'arrière autour d'un axe transverse pour laisser passer le toit escamotable. Lorsque le toit est rangé, il couvre non seulement la zone de coffre mais également la zone occupée par les sièges arrières. Par ailleurs le véhicule n'est pas transformé en cabriolet car la structure arrière en forme d'arche ainsi que la porte arrière persiste au dessus de la ligne de caisse.

La porte arrière de ces véhicules type monocorps ou bicorps est souvent articulée autour d'un axe transverse situé au voisinage du bord arrière du toit ou alors elle est articulée sur un axe vertical..

L'invention vise une nouvelle porte arrière pour véhicule du type monocorps ou bicorps.

A cet effet l'invention a pour objet une porte arrière pour véhicule type bi-corps ou mono-corps comprenant un toit escamotable en deux parties, une partie avant et une partie arrière dont une venant se positionner au dessus de l'autre les dites parties étant mobile vers une position rangée couvrant la zone de coffre du véhicule caractérisé en ce que la porte arrière comprend deux bras visibles se projetant vers l'avant et dont les extrémités libres sont articulées sur au moins un axe transverse pour en permettre le basculement.

L'invention a également pour objet le véhicule mono-corps ou bi-corps pourvu du toit escamotable selon l'invention.

L'invention sera bien comprise à l'aide de la description ci après faite à titre d'exemple non limitatif en regard du dessin qui représente :
FIG 1 : Coupe longitudinale d'un véhicule équipé d'un toit selon l'invention en position couvrant l'habitacle.
FIG 2 : Coupe longitudinale d'un véhicule équipé d'un toit selon l'invention en position rangée
FIG 3a à FIG 3c : Vues de dessus d'un véhicule équipé d'un toit se déplaçant de sa position couvrant l'habitacle (figure 3a) à sa position rangée (figure 3c).
FIG 4 A : le toit de la figure 1 sans le véhicule et les liaisons avec ledit véhicule.
FIG 4B : le toit de la figure 2 sans le véhicule et les liaisons avec ledit véhicule.
FIG 5 : Vue latérale du mécanisme permettant de ranger le toit dans le coffre.
FIG 6 : Vue arrière du véhicule équipé du toit selon l'invention.
FIG 7 : Vue de 3/4 arrière d'un véhicule.

En se reportant au dessin, on voit un toit 1 pour véhicule type mono-corps ou bi-corps c'est à dire un véhicule dont le coffre est dans l'habitacle avec le dossier 2 des sièges arrières établissant une séparation physique sensiblement verticale entre la zone destinée aux occupants et celle 100 destinée aux rangements des bagages.

Eventuellement cet espace 100 de coffre est également délimité par un cache 101 bagage amovible.

Le toit 1 escamotable comprend une partie avant 3 et une partie arrière 4 reliées entre elles par des moyens 5 de déplacement de la partie avant 3 sur la partie arrière 4.

La partie avant 3 est fractionnée en un panneau arrière 6 et un panneau avant 7, le panneau avant 7 fermant une encoche 8 aménagée dans la zone avant 6A du panneau arrière 6, ces panneaux comportant des moyens 9 de liaison permettant de déplacer le panneau avant 7 sur la zone arrière 6B du panneau arrière 6.

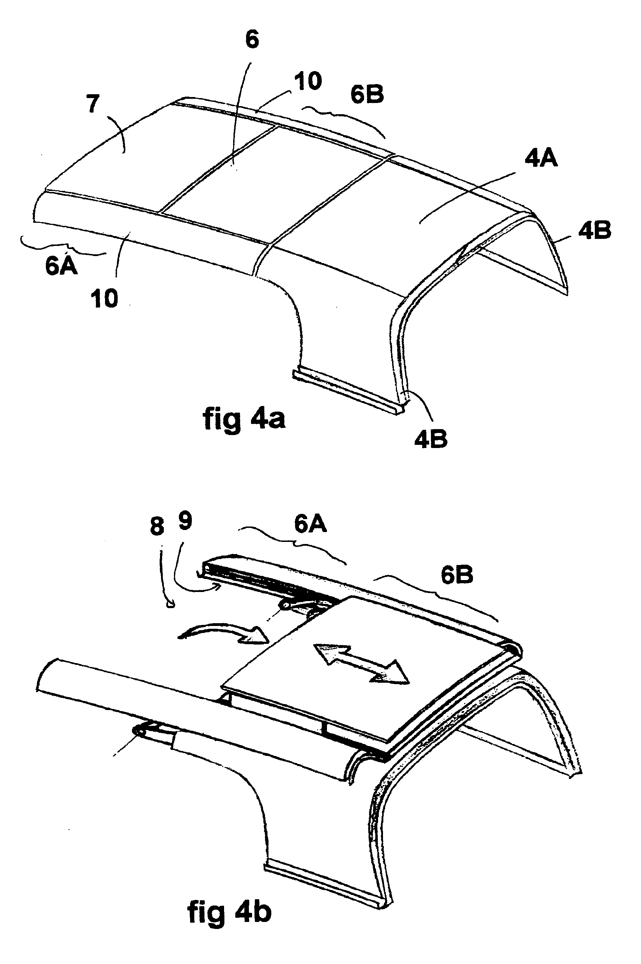

En vue de dessus le panneau arrière 6 comprend sur ses bords latéraux, deux bras latéraux 10 qui se prolongent vers l'avant délimitant ainsi l'encoche 8 dans laquelle prend place le panneau avant 7 dans l'état fermé du toit (figure 4A).

Les bras correspondent aux brancards longitudinaux.

L'étendue du panneau avant correspond à l'étendue de l'encoche.

Lorsque le panneau avant est disposé sur le panneau arrière, la face supérieure dudit panneau avant est sensiblement au niveau du sommet des bras.

En position fermée du toit les extrémités libres des bras s'ancrent sur la traverse 211 du pare-brise.

Les moyens de déplacement 5 sont ici réalisés par un jeu de deux biellettes, une 5A dite avant et l'autre 5B dite arrière.

Les moyens 5 de déplacement comprennent donc deux jeux de biellettes, un jeu de chaque coté localisé au niveau des bras latéraux 10 . Les biellettes sont articulées à l'avant de la partie arrière 4 de toit et sur les bras latéraux 10.

Les moyens 9 de liaison sont ici constitués par des glissières portées par les bras 10.

La partie arrière 4 comprend une paroi supérieure 4A qui peut être également un panneau et deux éléments latéraux 4B se prolongeant vers le bas sensiblement jusqu'à la ligne de caisse.

Cette partie arrière 4 est reliée à la caisse du véhicule par un moyen 11 de manoeuvre permettant d'abaisser cette partie arrière dans le coffre sans en modifier notoirement l'orientation.

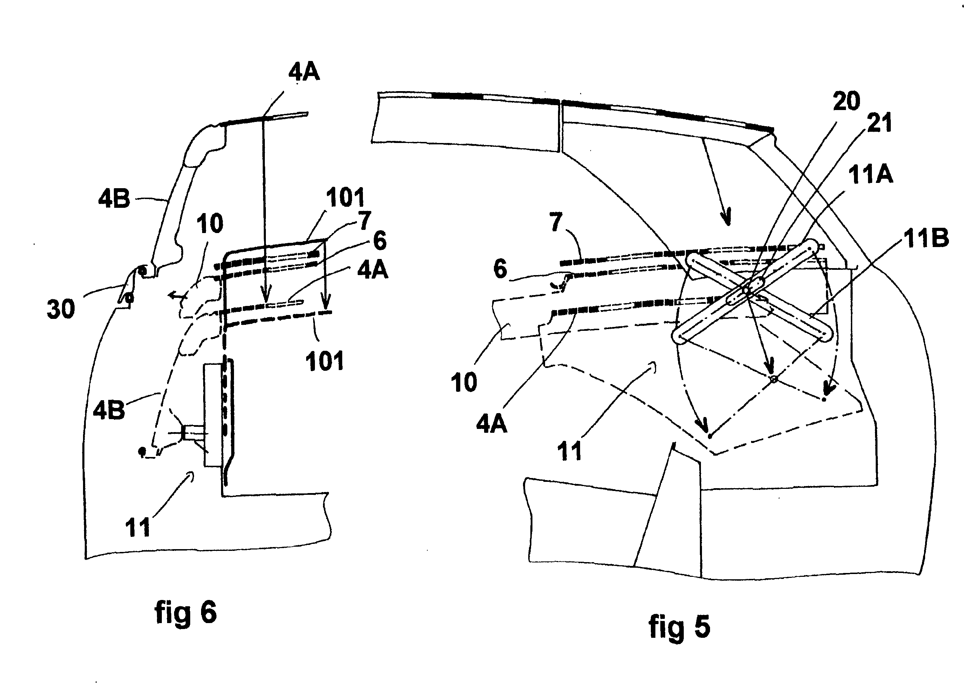

La section de cette partie arrière sera telle qu'elle puisse descendre dans le coffre voir la figure 6 où le toit rangé est en pointillés.

Pour ce faire, la lunette arrière 12 du véhicule sera escamotée dans le bas de la porte arrière 13.

Lorsque le toit est descendu dans le coffre, le véhicule est transformé en cabriolet.

Lorsque la partie avant 3 est reculée sur la partie arrière 4, les bras latéraux 10 du panneau arrière de la partie avant se projettent à l'avant du bord avant de la partie arrière.

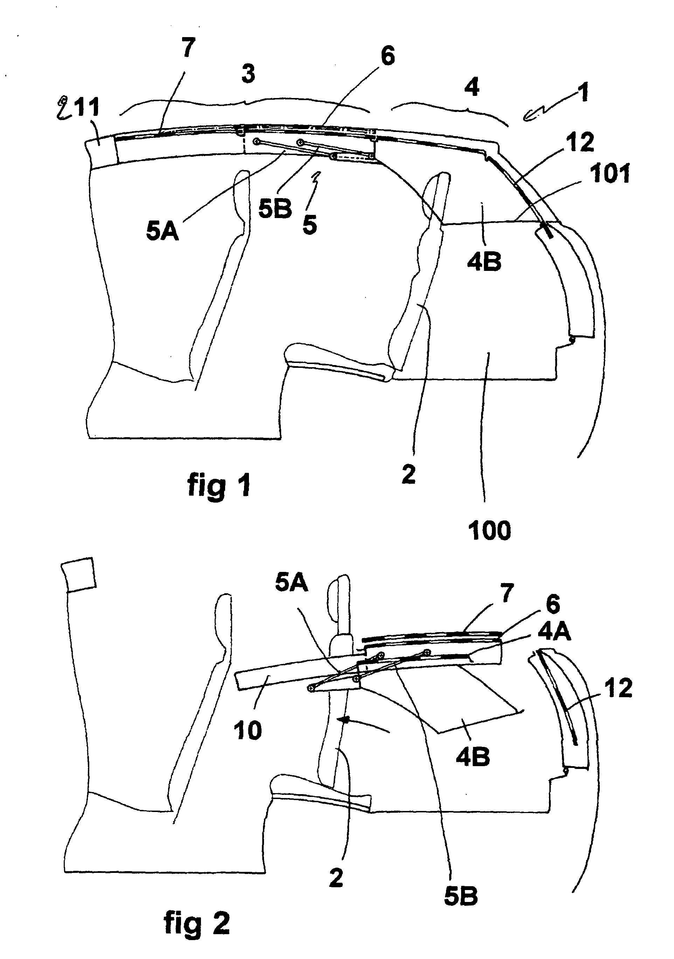

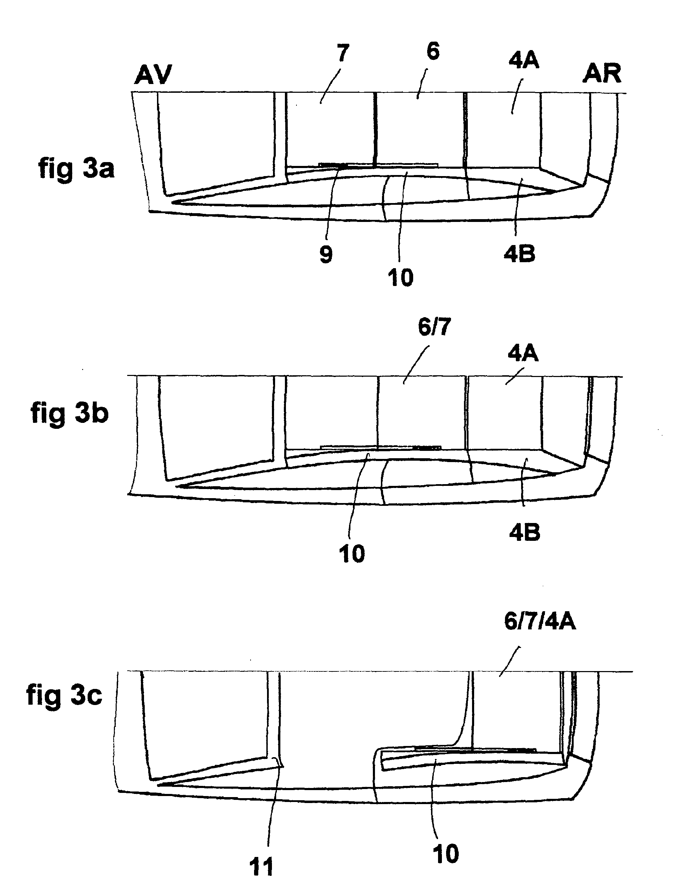

Le toit rangé, les bras latéraux se positionnent de part et d'autres de l'espace réservé aux sièges arrières ( voir figures 2, 3C, 4B). Dans certains cas, pour ranger le toit dans l'espace coffre, les dossiers des sièges arrières ou les sièges arrières devront être avancés comme dans la représentation figure 2 mais cela dépend de la longueur du véhicule.

Les bras 10 pourront au besoin être écartés vers l'extérieur du véhicule pour limiter leur emprise sur les places arrières et/ou pour réduire d'avantage l'épaisseur du toit rangé. Le toit rangé forme alors un couvercle de malle laissant subsister de la place sous celui ci pour ranger des bagages. Les panneaux 6, 7, 4A sont sensiblement positionnés au niveau de la ligne de caisse. L'échancrure 8 permet de disposer de places arrières même lorsque le toit est rangé.

Dans l'exemple représenté, le moyen 11 de manoeuvre de la partie arrière est constitué de bielles 11A, 11B montées en X de part et d'autre du toit. Les bielles sont articulées en chacune de leurs extrémités et entre elles au moyen d'un tourillon 20 engagé dans une lumière 21.

Il pourrait s'agir d'une système à une seule bielle et un guide pour un doigt. La cinétique du toit serait alors légèrement différente.

En figure 6 on voit que ce mécanisme de déplacement 11 déplace également le cache bagage 101.

Un autre avantage est la structure de toit en panneau 6,7,4A en panneau de faibles épaisseurs avec des bras 10 latéraux plus épais conférant une bonne résistance.

Lorsque le panneau avant 7 se glisse sur le panneau arrière 6 (figure 6,) on voit que l'ensemble des deux panneaux précités est légèrement plus épais que le seul panneau arrière 6.Ces panneaux peuvent être en tôle ou en verre.

Comme il l'a été dit précédemment, pour abaisser le toit et le placer dans la zone de coffre, la lunette arrière 12 doit être abaissée et rangée dans la partie basse de la porte arrière.

La lunette arrière n'est pas entourée par un arceau lié à la porte. Ce sont les éléments latéraux 4B et la partie supérieure 4A qui font office d'arceau. Indépendamment de la structure particulière du toit on va décrire un porte arrière. Le toit est bien entendu utilisable sans ce type de porte arrière.

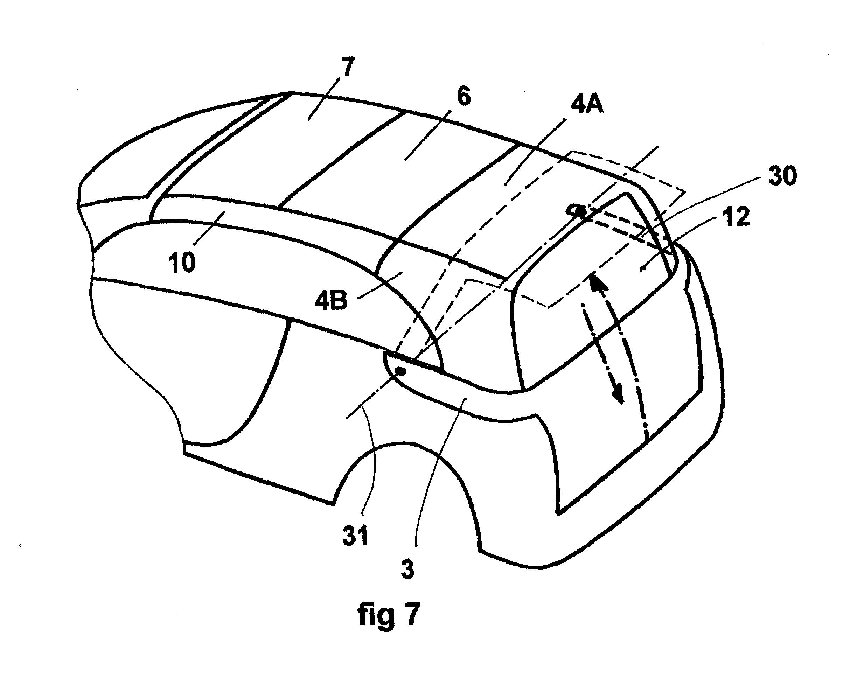

La partie basse de la porte arrière comporte deux bras 30 qui se projettent vers l'avant et dont les extrémités libres sont articulées autour d'un axe transverse 31. Ces bras sont situés sensiblement au niveau du bord supérieur de la partie basse de la porte c'est à dire au voisinage de la ligne de caisse. Ils encadrent les deux flancs de la structure latérale fixe de la carrosserie (figures 6 et 7). Les bras 30 sont des pièces de résistances couvertes par des pièces de carrosserie, donc visibles depuis l'extérieur. Pour l'accès au coffre, on éclipse la lunette arrière et on lève la porte arrière qui pivote autour de l'axe transverse 31 pour éventuellement la placer au dessus du toit lorsque le toit couvre l'habitacle. Dans ce cas ( figure 7 pointillé) la longueur des bras sera telle qu'elle permet ce mouvement sans objet sur la trajectoire. Au lieu d'un axe transverse simple, il peut s'agir d'une articulation à axes multiples tel que biellettes articulées formant parallélogramme. Dans une variante de réalisation, il n'est pas nécessaire d'éclipser la lunette arrière dans la porte arrière. Dans ce cas une descente partielle de la lunette pourra être suffisante.

Au moins indirectement la porte comprendra alors des moyens de gestion et/ou de commande du déplacement de la lunette arrière dans le bas de la porte pour permettre la descente du toit vers la zone de rangement.

## Revendications

1. Porte arrière pour véhicule type bi-corps ou mono-corps comprenant un toit escamotable en deux parties, une partie avant et une partie arrière dont une venant se positionner au dessus de l'autre les dites parties étant mobile vers une position rangée couvrant la zone de coffre du véhicule **caractérisée en ce que** la porte arrière comprend deux bras (30) visibles se projetant vers l'avant et dont les extrémités libres sont articulées sur au moins un axe transverse (31) pour en permettre le basculement.

2. Porte arrière selon la revendication 1 **caractérisée en ce que** les extrémités libres des deux bras 30 sont reliées à la caisse du véhicule par une articulation à axes multiples.

3. Porte arrière selon la revendication 1 ou 2 **caractérisée en ce que** les bras sont situés sensiblement au niveau du bord supérieur de la partie basse de la porte c'est à dire au voisinage de la ligne de caisse.

4. Porte arrière selon l'une quelconque des revendications précédentes **caractérisée en ce que** les bras sont des pièces de résistances couvertes par des pièces de carrosserie.

5. Porte arrière selon l'une quelconque des revendications **caractérisé en ce qu'**elle comprend au moins indirectement alors des moyens de gestion et/ou de commande du déplacement de la lunette arrière dans le bas de la porte pour permettre la descente d'un toit rétractable vers une zone de rangement située dans le coffre.

6. Véhicule du type bi-corps ou tri-corps équipé d'un toit rétractable **caractérisé en ce qu'**il est pourvu d'une porte arrière selon l'une quelconque des revendications 1 à 4.
